(19) Europäisches Patentamt
European Patent Office
Office européen des brevets

(11) **EP 2 921 879 B1**

(12) **EUROPÄISCHE PATENTSCHRIFT**

(45) Veröffentlichungstag und Bekanntmachung des Hinweises auf die Patenterteilung:
**16.09.2020   Patentblatt 2020/38**

(21) Anmeldenummer: **14001034.9**

(22) Anmeldetag: **20.03.2014**

(51) Int Cl.:
*G01S 17/89* (2020.01)        *G06K 9/00* (2006.01)
*G01C 7/02* (2006.01)        *G01C 13/00* (2006.01)
*G01S 17/10* (2020.01)        *G01S 7/48* (2006.01)

(54) **Klassifikationsverfahren für Messpunkte eines topobathymetrischen Datensatzes**

Classification method for measuring points of a topobathymetric data set

Procédé de classification de points de mesure d'un jeu de données topo-bathymétrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.09.2015   Patentblatt 2015/39**

(73) Patentinhaber: **Airborne HydroMapping GmbH 6020 Innsbruck (AT)**

(72) Erfinder: **Steinbacher, Frank 6020 Innsbruck (AT)**

(74) Vertreter: **Müller-Boré & Partner Patentanwälte PartG mbB Friedenheimer Brücke 21 80639 München (DE)**

(56) Entgegenhaltungen:
**AT-A1- 509 180**

- **Russ Faux ET AL: "Small Footprint Topo-Bathymetric LiDAR PNAMP Remote Sensing Forum", , 8. März 2013 (2013-03-08), XP055138442, Gefunden im Internet: URL:http://www.pnamp.org/sites/default/fil es/faux_pnamp_rs_forum_may_8_2013_edit.pdf [gefunden am 2014-09-05]**

EP 2 921 879 B1

**Beschreibung**

Die Erfindung betrifft ein Verfahren zur Klassifikation von topographischen bathymetrischen Messpunkten in einem topobathymetrischen Datensatz sowie ein entsprechendes System und ein Computerprogrammprodukt.

Zur detaillierten Kartierung der Topographie und Bathymetrie der Erdoberfläche werden häufig luftgestützte Messmethoden (sogenanntes "air borne mapping") angewandt, da mit diesen große, insbesondere unwegsame, Gebiete in einfacher Weise kartiert werden können. Die Messung der Topobathymetrie kann durch das Aussenden von Laserstrahlung vom Luftfahrzeug aus erfolgen, die an der Erdoberfläche reflektiert und durch einen Empfänger am Luftfahrzeug registriert wird. Dabei entspricht die Höhe des Luftfahrzeugs über den Reflexionspunkten auf der Erdoberfläche ungefähr der Hälfte der Laufzeit des Lichtes des Laserstrahls vom Luftfahrzeug zur Erdoberfläche und zurück multipliziert mit der Lichtgeschwindigkeit. Bei bekannter Höhe des Luftfahrzeuges kann somit aus einer Vielzahl von Reflexionsmessungen von flächig verteilten Reflexionspunkten die Topobathymetrie der Erdoberfläche in einem Messgebiet berechnet werden.

Diese Berechnung ist in Gebieten mit Gewässern problematisch. An der Wasseroberfläche findet sowohl eine Reflexion als auch eine Transmission des Laserstrahls statt. Der transmittierte Laserstrahl wird je nach Einfallswinkel auf die Wasseroberfläche unterschiedlich stark gebrochen bzw. abgelenkt bzw. refraktiert. Der refraktierte Laserstrahl kann durch das Wasser absorbiert werden und/oder zu einem späteren Zeitpunkt am Gewässergrund oder innerhalb der Wassersäule (z.B. an Wasserpflanzen) reflektiert werden. Der am Gewässergrund oder aus innerhalb der Wassersäule stammende reflektierte Laserstrahl kann nach einer weiteren Refraktion an der Wasseroberfläche wieder zurück zum Luftfahrzeug gelangen und dort am Empfänger registriert werden und zwar zu einem späteren Zeitpunkt als der direkt an der Wasseroberfläche reflektierte Strahl.

Wird die Reflexion des Laserstrahls an der Wasseroberfläche zur Berechnung der Erdoberfläche verwendet, so repräsentiert die Karte im Bereich von Wasser die Wasseroberfläche. Wird dagegen die Reflexion des Laserstrahls am Gewässergrund zur Berechnung der Erdoberfläche verwendet, so repräsentiert die Karte dann ungefähr den Gewässerboden. Die Übereinstimmung mit dem tatsächlichen Verlauf des Gewässerbodens hängt unter anderem davon ab, wie gut die Refraktion an der Wasseroberfläche und damit die Ablenkung des geometrischen Laufweges des Lichtes bei der Berechnung berücksichtigt werden können sowie eine Laufzeitkorrektur ab dem Zeitpunkt des Wechsels des Laserstrahls vom Medium Luft in das Medium Wasser. Mitunter kann anhand des registrierten Laserstrahl nicht bestimmt werden, ob ein detektierter Laserstrahl von einer Reflexion an der Erdoberfläche, an einer Gewässeroberfläche oder einem Gewässergrund resultiert. Daher kann eine Berechnung der Topographie ohne eine Berücksichtigung dieses Phänomens dazu führen, dass die Karte des vermessenen Gebietes eine stark unregelmäßige bzw. abgestufte Topographie zeigt, die von abwechselnd nebeneinanderliegenden topographischen Punkten herrühren, die einmal die Wasseroberfläche und einmal den Gewässergrund repräsentieren.

Die AT 509 180 A1 offenbart ein optoelektronisches Messsystem mit einer optoelektronischen Sensoreinheit, die eine Empfangseinrichtung umfasst, welche die von Zielen stammende IR-, sichtbare und / oder UV-Strahlung empfängt, wobei der Empfangseinrichtung ein optisches System vorgeschaltet ist, welches eine optische Achse und ein Gesichtsfeld definiert, ferner mit einer Ablenkeinrichtung für die optische Achse und das Gesichtsfeld der Empfangseinrichtung, die ein rotierendes Polygonspiegelrad umfasst, weiters mit einer Auswerteeinrichtung für die Sensorsignale, das Messsystem umfasst ferner eine Datenverarbeitungs-Einrichtung, die zu jedem Messwert den Ablenkwinkel des Polygonspiegelrads erfasst und so Messdaten erzeugt, die einem Messsystem- eigenen Koordinatensystem zugeordnet werden, wobei das Messsystem mindestens eine weitere optoelektronische Sensoreinheit umfasst und die optischen Achsen der weiteren Sensoreinheiten von demselben Polygonspiegelrad abgelenkt werden, wobei die Empfangsrichtungen der ersten und der weiteren Sensoreinheiten von verschiedenen Facetten des Polygonspiegelrades abgelenkt werden und damit der Zielraum von mehreren Sensoreinheiten im Wesentlichen gleichzeitig abgetastet wird.

Russ Faux ET AL: "Small Footprint Topo-Bathymetric LiDAR PNAMP Remote Sensing Forum", 8. Mai 2013, offenbart eine topobathymetrische LiDAR Pilot Studie mit einem Riegl VQ-820-G-Sensor zur Genauigkeit beim Kartieren von Gelände mit Gewässer.

Eine Aufgabe der Erfindung besteht darin, ein Verfahren bereitzustellen, welches eine semi-automatische Klassifikation der vermessenen topobathymetrischen Punkte erlaubt und somit eine sichere Kartierung der Erdoberfläche und/oder des Gewässergrundes ermöglicht.

Die Aufgabe wird durch ein Verfahren mit den Merkmalen des Anspruchs 1 gelöst. Bevorzugte Ausführungsformen sind Gegenstand der abhängigen Ansprüche.

Verfahren gemäß einem Aspekt

Ein Aspekt betrifft ein Verfahren, insbesondere ein computergestütztes Verfahren, zur Klassifikation von topographischen und/oder bathymetrischen Messpunkten in einem topobathymetrischen Datensatz mit folgenden Schritten:

- Bereitstellen eines topobathymetrischen Datensatzes, der zumindest eine topobathymetrische Messung $M_j$ mit

einem registrierten Reflexionssignal $R_{t1}$ zur Zeit t1 enthält, woraus ein topographischer Messpunkt Xm berechnet wird;

- Bereitstellen von klassifizierten topographischen Startpunkten Xs mit zumindest der bekannten Eigenschaft, ob der jeweilige Startpunkt Xs zu einer Wasseroberfläche oder zu einer Landoberfläche gehört;
- Berechnung eines ersten Qualitätsindikators Q1 als Funktion der Abstände zwischen dem Messpunkt Xm und den Startpunkten Xs;
- Berechnen eines zweiten Qualitätsindikators Q2 basierend auf der zumindest einen obengenannten topobathymetrischen Messung Mj, die zur Berechnung des Messpunktes Xm diente, als Funktion eines oder mehrerer der folgenden Merkmale:

  - des zum Reflexionssignal $R_{t1}$ gehörigen ersten Reflexionskoeffizienten $R_{x1}$;
  - zumindest eines weiteren registrierten Reflexionssignal $R_{t2}$ zur Zeit t2;
  - des zeitlichen Abstandes t2-t1 zwischen den beiden Reflexionssignalen $R_{t1}$ und $R_{t2}$;
  - den zum Reflexionssignal $R_{t2}$) gehörigen zweiten Reflexionskoeffizienten $R_{x2}$;
  - eines Reflexionskoeffizienten $R_{xs}$ für einen der Startpunkte Xs, bevorzugt des Startpunktes mit dem geringsten Abstand zum Messpunkt Xm;

- Berechnen einer binären Klassifikationsfunktion in Abhängigkeit von dem ersten und zweiten Qualitätsindikator (Q1 und Q2);
- Klassifizieren des Messpunktes Xm als Landoberfläche oder Wasseroberfläche auf Grundlage der Klassifikationsfunktion.

Bei dem topobathymetrischen Datensatz kann es sich insbesondere um einen topobathymetrischen lidar Datensatz handeln.

Vorteilhafterweise erlaubt das Verfahren eine automatische, insbesondere computergestützte, Klassifikation der Messpunkte Xm, wodurch weiter vorteilhafterweise weitere Verfahrensschritte der Kartierung der Topographie eines Gebietes in der Kenntnis durchführen lassen, ob der Messpunkt eine Gewässeroberfläche darstellt oder nicht.

Die zumindest eine Messung liegt als topobathymetrischer Datensatz vor. Bevorzugt kann der topobathymetrische Datensatz lediglich die registrierte(n) Laufzeit(en) eines oder mehrerer vom Empfänger registrierten Lichtsignals bzw. Lichtsignale enthalten, die einem Aussenden eines Laserstrahls von einer Laserquelle zuzuordnen ist bzw. sind. Mit anderen Worten kann der topobathymetrische Datensatz dadurch erzeugt werden, dass ein Laserstrahl von einer luftgestützten Laserquelle emittiert wird und ein Empfänger die Laufzeit(en) von der Laserquelle zum Empfänger erfasst. Als Laufzeit kann dabei die Zeit definiert werden, die seit dem Emittieren des Laserstrahls durch die Laserquelle vergangen ist und bei welcher die am Empfänger registrierte Lichtintensität für die von der Laserquelle emittierte Wellenlänge einen vorbestimmten Schwellwert (Detektionsschwellwert) überschreitet.

Weiter kann der topobathymetrische Datensatz neben der/den registrierte(n) Laufzeit(en) des/der registrierten Lichtsignals/Lichtsignale auch die registrierte Lichtintensität enthalten.

Insbesondere kann der topobathymetrische Datensatz den vollständigen Verlauf (Wellenform) der registrierten Lichtintensität enthalten. Vorteilhafterweise können in diesem Fall die Ankunftszeiten eines Lichtstrahles und dessen Lichtintensität zu einem späteren Zeitpunkt berechnet werden.

Der topobathymetrische Datensatz enthält die Registrierungen des Empfängers, die zumindest einer Emission von Laserlicht durch die Laserquelle zuzuordnen ist. Mit anderen Worten wird bevorzugt die Laserquelle genau einmal aktiviert, um einen Laserstrahl zu emittieren, während der Empfänger die Lichtintensität registriert. Das Registrieren kann über einen bestimmten Zeitraum erfolgen, der beendet sein kann, bevor die Laserquelle ein weiteres mal aktiviert wird. Dadurch kann der topobathymetrische Datensatz abgeschlossen und verarbeitet werden, während weitere topobathymetrische Datensätze erstellt werden. Es versteht sich, dass der topobathymetrische Datensatz auch die Registrierungen des Empfängers enthalten kann, denen zumindest zwei, drei, vier, fünf, sechs, oder mehr Emissionen von Laserlicht durch die Laserquelle zuzuordnen sind. Mit anderen Worten wird bevorzugt die Laserquelle mehrmals aktiviert, um zu verschiedenen Zeiten Laserstrahlen zu emittieren, während der Empfänger die Lichtintensität registriert. Dadurch kann der topobathymetrische Datensatz eine Vielzahl von Messungen enthalten, beispielsweise aus dem gesamten zu kartierenden Gebiet, die zu einem späteren Zeitpunkt als der Messung selbst ausgewertet werden.

Der topobathymetrische Datensatz enthält folglich zumindest eine topobathymetrische Messung Mj. Jede der zumindest einen Messung Mj enthält ein registriertes Reflexionssignal $R_{t1}$ zur Zeit t1. Das Reflexionssignal kann dabei lediglich die Zeit t1 der Registrierung enthalten. Zusätzlich kann das Reflexionssignal auch die vom Empfänger registrierte Lichtintensität umfassen. Die Messung Mj kann außerdem eine vollständige Aufzeichnung der vom Empfänger registrierten Lichtintensitäten in Form einer Zeitreihe Mj,i umfassen, aus welcher zumindest ein Reflexionssignal R(ti) zu einem Zeitpunkt ti bestimmbar ist.

Eine geradlinige Ausbreitung des Laserstrahls vorausgesetzt, wobei der Laserstrahl bevorzugt entlang einer Vertikalen bzw. Senkrechten zur Erdoberfläche propagiert, entspricht der Abstand zwischen Laserquelle bzw. Empfänger, die Näherungsweise die gleiche Höhe über der Erdoberfläche aufweisen, etwa der Hälfte der registrierten Laufzeit t1 bzw. ti des Laserstrahls multipliziert mit der Lichtgeschwindigkeit, also $H = c \, ti/2$, wobei c die Lichtgeschwindigkeit von ca. 300000 km/s im Vakuum bezeichnet. Aus der Kenntnis der Position der Laserquelle $X_q$ und der Position des Empfängers $X_e$ zum Zeitpunkt der Messung können die Koordinaten des topographischen Messpunktes $X_m$ berechnet werden.

Zur Klassifikation des berechneten topographischen Messpunktes $X_m$ werden bereits klassifizierte topographische Startpunkte $X_s$ bereitgestellt. Für die Startpunkte ist zumindest die Eigenschaft bekannt, ob der jeweilige Startpunkt $X_s$ zu einer Wasseroberfläche oder zu einer Landoberfläche gehört. Die Wahl des Startpunktes $X_s$ kann so erfolgen, dass der Punkt eine Messung darstellt, die der Wasseroberfläche im Datensatz entspricht. Die Suche nach Wasseroberflächenpunkten kann sich im wesentlichen in der Bandbreite von -10cm (oberhalb) bis +15cm (unterhalb) ausgehend vom Startpunkt bewegen. Die systembedingte Penetration des Lichtstrahles durch das Medium Wasser mit der dadurch technisch bedingten zeitlichen Verzögerung der ersten Registrierung eines Echos wird als Globalwert dann für die Korrektur der Wasserspiegellage herangezogen.

Als Funktion von Abständen zwischen dem zumindest einen berechneten Messpunkt $X_m$ des topobathymetrischen Datensatzes und den Startpunkten $X_s$ wird ein erster Qualitätsindikator Q1 berechnet, der auch als geometrischer Qualitätsindikator bezeichnet werden kann. Dabei kann insbesondere als Abstand zwischen dem zumindest einen Messpunkt $X_m$ und einem der Startpunkte $X_s$ der euklidsche Abstand bzw. die L2-Norm verwendet werden. Es versteht sich, dass alternativ oder zusätzlich auch andere Abstandsnormen, wie beispielsweise die L1-Norm, zwischen beiden Punkten verwendet werden können, um den ersten Qualitätsindikator Q1 zu berechnen.

Zu dem zumindest einen Messpunkt $X_m$ des topobathymetrischen Datensatzes wird ein zweiter Qualitätsindikator Q2 berechnet, der auch als intrinsischer Qualitätsindikator bezeichnet werden kann. Der zweite Qualitätsindikator basiert auf der zumindest einen topobathymetrischen Messung $M_j$, die zur Berechnung des Messpunktes $X_m$ diente bzw. auf dem in der Messung $M_j$ enthaltenen Reflexionssignal $R_{t1}$ oder der vollständigen Zeitreihe $M_{j,i}$, falls diese registriert wurde. Mit anderen Worten kann der zweite Qualitätsindikator als Funktion eines oder mehrerer der folgenden Merkmale berechnet werden:

1. des zum Reflexionssignal $R_{t1}$ gehörigen ersten Reflexionskoeffizienten $R_{x1}$;
2. zumindest eines weiteren registrierten Reflexionssignals $R_{t2}$ zur Zeit t2;
3. des zeitlichen Abstandes t2-t1 zwischen den beiden Reflexionssignalen $R_{t1}$ und Rt2;
4. des zum Reflexionssignal $R_{t2}$ gehörigen zweiten Reflexionskoeffizienten $R_{x2}$;
5. eines Reflexionskoeffizienten ($R_{xs}$) eines der Startpunkte $X_s$, bevorzugt des Startpunktes mit dem geringsten Abstand zum Messpunkt $X_m$.

Der erste und/oder zweite Qualitätsindikator kann/können normiert sein. In Abhängigkeit von dem ersten und zweiten Qualitätsindikator wird eine binäre Klassifikationsfunktion H(Q1, Q2) berechnet, wobei der erste und zweite Qualitätsindikator durch unterschiedliche Faktoren gewichtet werden können. Die Klassifikationsfunktion kann als Heavyside-Funktion wirken, d.h. lediglich die Werte 0 oder 1 ausgeben. Alternativ können auch andere binäre Wertepaare durch die Klassifikationsfunktion ausgegeben werden, wie beispielsweise [-1;1] oder [1;2]. Dem Ergebnis der Klassifikationsfunktion wird eine Eigenschaft des Messpunktes $X_m$ zugeordnet, um diesen zu Klassifizieren und zwar als Landoberfläche oder Wasseroberfläche. Die Qualitätsindikatoren können beispielsweise in Abhängigkeit von dem Abstand, der Abweichung zu einer Preselektion, der Abweichung zu Suchparametern, der Reflexion und/oder der Waveform gewichtet werden. Der Schwellwert für eine Klassifikation kann beispielsweise von der Bandbreite des Startpunktes, dem Reflexionswert/Amplitude und/oder einer Vorauswahl innerhalb einer Fläche festgelegt werden.

Bevorzugte Ausführungsformen des Klassifikationsverfahrens

Vorzugsweise umfasst das Bereitstellen der Startpunkte das Bestimmen bzw. Festlegen einer oder mehrerer der folgenden Eigenschaften für jeden der Startpunkte:

1. Eigenschaft des Gewässers, insbesondere der Gewässeroberfläche, wie beispielsweise
"fließendes Gewässer", welches eine raue bzw. wellige Wasseroberfläche aufweisen kann;
"stehendes Gewässer", welches eine glatte bzw im wesentlichen ebene Wasseroberfläche aufweisen kann;
"Küste", welche einen zeitlich variablen Wasserstand und im Bereich der Brandung eine rauhe Wasseroberfläche aufweisen kann;
Größe der zusammenhängenden Wasserflächen, insbesondere kann die Größe der Wasserflächen statistisch durch ihre räumlichen Korrelationslänge(n) charakterisiert sein.

2. Radius des horizontalen Suchumfelds um den jeweiligen Startpunkt, in welchem nachbarschaftliche Beziehungen angenommen werden können (entspricht einer mittleren isotropen räumlichen Korrelationslänge). Bevorzugt kann das horizontale Suchumfeld durch eine richtungsabhängige Länge (anisotrope Korrelationslänge) beschrieben sein.

3. Eigenschaft des Gewässers, insbesondere des Gewässergrundes bzw. der Gewässersohle, wie beispielsweise "fließendes Gewässer" oder "alpines Gewässer", welches eine raue bzw. stark strukturierte Gewässersohle aufweisen kann;

"stehendes Gewässer" oder "Meer", welches eine glatte bzw. im wesentlichen ebene Gewässersohle aufweisen kann.

4. Radius des vertikalen Suchumfelds um den jeweiligen Startpunkt, in welchem nachbarschaftliche Beziehungen angenommen werden können (entspricht einer räumlichen Korrelationslänge). Bevorzugt kann das vertikale Suchumfeld durch eine richtungsabhängige Länge (anisotrope Korrelationslänge) beschrieben sein.

5. Relative Position des Startpunktes zur nächstliegenden bekannten oder geschätzten Uferlinie oder zu mehreren Uferlinien .

6. Geschätzte Punktdichten (Punkte / $m^2$) im Bereich des Wasserkörpers.

7. Geschätzte Trübung im Bereich des Wasserkörpers und Schätzung der Mächtigkeit des dadurch verursachten Punkteschleiers an der Wasseroberfläche. Insbesondere kann im Falle des Vorhandenseins eines Trübungsschleiers festgelegt bzw. bestimmt werden, welche Dicke der Trübungsschleier aufweist.

8. Bevorzugt kann der Einfluss der Eindringtiefe des Laserstrahls in den Wasserkörper dadurch berücksichtigt werden, dass eine zeitliche Korrektur der Messfehler aufgrund der Abhängigkeit der Eindringtiefe des Laserstrahls in das Gewässer von Trübung und Welligkeit der Wasseroberfläche festgelegt oder anhand von Berechnungen bestimmt wird. Die zeitliche Korrektur durch eindringtiefenbedingte Messfehler kann auch auf einer ersten Annahme, Erfahrung oder Angaben aus terrestrischer oder sonstiger Erhebung erfolgen.

Die Eigenschaften des/der Startpunkte(s) können an den gefundenen Punkt übergeben werden.

Vorzugsweise kann das Berechnen des ersten Qualitätsindikators Q1 eine Tensorfeldberechnung umfassen, um einen räumlichen Bezug der Messpunkte Xm und der Startpunkte zueinander zu bekommen. Neben einer Berechnung der Koordinateninformationen (Lage der Punkte zueinander in horizontaler und vertikaler Richtung) kann die Tensorfeldberechnung, d.h. die Berechnung eines Punkt-Verteilungs-Tensors, durchgeführt werden. Weiter bevorzugt kann zur Charakterisierung des räumlichen Bezugs der Messpunkte Xm und der Startpunkte Xs zueinander ein "Spherical/Cylindrical Neighborhood Ratio (SCN-Ratio)" berechnet werden.

Der Punkt-Verteilungs-Tensor trifft eine Aussage, ob sich benachbarte Punkte in Abhängigkeit von ihrer Distanz zum Startpunkt Xs noch auf einer gemeinsamen Ebene befinden. Diese Technik wurde bisher im Bereich der Beleuchtungsvisualisierung verwendet. Der Punkt-Verteilungs-Tensor einer Menge von N Punkten Pi mit i=1, ..., N ist folgendermaßen definiert:

$$S(Pi) = \frac{1}{N} \sum_{k=1}^{N} \omega_n(|t_{ik}, r|)(t_{ik} \otimes t_{ik}^\tau) \tag{1}$$

wobei $\otimes$ das Tensorprodukt bezeichnet, $\tau$ die Transponierte und $t_{ik}$ = Pi - Pk. Die Funktion $\omega_n$ ist eine Gewichtungsfunktion in Abhängigkeit der Distanz eines Punktes zu einem Mittelpunkt Pi und einem Radius der Nachbarschaft r, der konstant sein kann oder durch ein skalares Feld r(Pi) definiert wird. Im folgenden sind sieben Beispiele der Gewichtungsfunktion $\omega$ angegeben:

Das Spherical/Cylindrical Neighborhood Ratio oder kurz SCN-Ratio ist das Verhältnis zwischen der Anzahl $N_K$ der Punkte innerhalb einer Kugel und der Anzahl $N_Z$ der Punkte innerhalb eines Zylinders mit unendlich ausgedehnter Höhe, also $N_K$ geteilt durch $N_Z$.

whereby $\otimes$ denotes the tensor product, $\tau$ the transpose and $t_{ik}$ = $P_i$ - $P_k$. $\omega_n(|t_{ik}|, r)$ is a weighting function dependent on the distance of a point sample to a center point $P_i$ and a radius of a neighborhood $r$, which can be constant or defined by a scalar field on the points: $r(P_i)$. We did not find a generally optimal solution for the weighting function, but implemented seven choices for our first investigations:

$$\omega_1 = 1 \tag{2}$$

$$\omega_2 = 1 - x/r \tag{3}$$

$$\omega_3 = 1 - (x/r)^2 \tag{4}$$

$$\omega_4 = r/x^2 \tag{5}$$

$$\omega_5 = \begin{cases} 1 - \frac{3}{2}a^2 + \frac{3}{4}a^3 & 0 \le a < 1 \\ \frac{1}{4}(2-a)^3 & 1 \le a < 2 \\ 0 & \text{otherwise} \end{cases} \tag{6}$$

$$\omega_6 = \begin{cases} (\frac{5}{2}-b)^4 - 5(\frac{3}{2}-b)^3 + 10(\frac{1}{2}-v)^b & [0,\frac{1}{2}) \\ (\frac{5}{2}-b)^4 - 5(\frac{3}{2}-b)^3 & [\frac{1}{2},\frac{3}{2}) \\ (\frac{5}{2}-b)^4 & [\frac{3}{2},\frac{5}{2}) \\ 0 & [\frac{5}{2},\infty) \end{cases} \tag{7}$$

$$\omega_7 = \begin{cases} (3-c)^5 - 6(2-c)^5 + 15(1-c)^5 & [0,1) \\ (3-c)^5 - 6(2-c)^5 & [1,2) \\ (3-c)^5 & [2,3) \\ 0 & [3,\infty) \end{cases} \tag{8}$$

Vorzugsweise kann das Berechnen des ersten Qualitätsindikators Q1 eine Auswertung der nachbarschaftlichen und räumlichen Beziehungen der Startpunkte Xs zum dem zumindest einen Messpunkt Xm umfassen. Bevorzugt wird ausgehend von den Startpunkten nach zumindest einem der folgenden nachbarschaftlichen und räumlichen Beziehungen gesucht:

1. Liegen Punkte in der Nachbarschaft im definierten räumlichen Abstand (vertikal/horizontal) zum Startpunkt Xs (ja/nein).

2. Berechnung des horizontalen und/oder vertikalen Abstandes der Startpunkte und des zumindest einen Messpunktes Xm zueinander auf Grundlage der Tensorfeldberechnung. Insbesondere Berechnung, ob der zumindest eine Messpunkt Xm von einem Startpunkt Xs aus in Richtung eines Ufers liegt und, falls zwei Ufer vorhanden sind, in Richtung welchen Ufers.

3. Bestimmen, ob die topobathymetrische Messung Mj, die zur Berechnung des Messpunktes Xm diente, zumindest ein weiteres registriertes Reflexionssignal aufweist, welches zeitlich später registriert wurde. Für den Fall, dass ein zeitlicher Nachfolger registriert wurde, welcher einen geometrisch tieferen Punkt repräsentiert, kann bestimmt werden, ob dieser tiefere Punkt in der Klasse Trübungsschleier liegt.

4. Bestimmen des Höhenunterschiedes zwischen der Flughöhe bzw. räumlichen Position der Laserquelle und des Empfängers während der Registrierung der zu den Startpunkten zugehörigen Messungen und der Flughöhe bzw. räumlichen Position der Laserquelle und des Empfängers während der Registrierung der zu dem benachbarten Messpunkt zugehörigen Messung.

5. Bestimmen eines Höhenfehlers aus einem Streifenabgleich für den Fall, dass es sich bei den Messpunkten und Startpunkten um Punkte handelt, die auf Grundlage von Messungen aus unterschiedlichen Scanstreifen herrühren.

6. Berechnen des Abstandes des Messpunktes Xm zur Uferlinie, welche vorher bei der Bereitstellung der Startpunkte manuell geschätzt bzw. gekennzeichnet wurde.

7. Berechnen der Punktdichte (z.B. in Punkten pro m$^2$) und Berechnen der Punktdichte innerhalb des vertikalen und/oder horizontalen Suchumfeldes. Insbesondere kann der Suchkörper durch Voxel, Zylinder, Kreise/Kugeln o.ä. definiert werden.

8. Berechnen der vertikalen Verteilung und/oder Positionierung des Messpunktes Xm, wenn dieser innerhalb des Mess- und Trübungsschleiers liegt.

9. Quantifizieren anhand der Tensorfeldberechnung, wie gut ein Nachbarpunkt mit dem Startpunkt auf einer Ebene liegt. Für die Tensorfeldberechnung wird ein Radius vorbestimmt. Der beste Radius zur Berechnung hängt vom jeweiligen Datensatz ab, wobei in der Regel zwischen Werten von etwa null bis etwa zwei Metern gesucht wird.

10. Auswerten des "Spherical/Cylindrical Neighborhood Ratio".

Die Auswertung des "Spherical/Cylindrical Neighborhood Ratio" kann beispielsweise folgendermaßen ablaufen: Die Kugel durchläuft die Zylindersäule. In dem Bereich in dem das Verhältnis zwischen "Punkte in Kugel" zu "Punkte in Zylinder" 1 am nächsten kommt ist ein Zeichen für eine hohe Punktdichte im Bereich des Gewässerschleiers. Die räumliche Lage kann noch über Xs angeglichen werden.

Vorzugsweise kann das Berechnen des zweiten Qualitätsindikators Q2 eine Auswertung der nachbarschaftlichen und räumlichen Beziehungen der Startpunkte Xs zu dem zumindest einen (nächstliegenden) Messpunkt Xm umfassen. Bevorzugt wird ausgehend von den Startpunkten nach zumindest einem der folgenden nachbarschaftlichen und/oder räumlichen Beziehungen gesucht:

1. Hat der Messpunkt Xm des gefundenen Punktes einen zeitlichen Nachfolger im gleichen Messstrahl (Lastpuls oder weiterer Punkt unterhalb, liegt dieser Punkt in der Klasse Trübungsschleier)?
2. Hat der Messpunkt Xm des gefundenen Punktes einen zeitlichen Vorgänger im gleichen Messstrahl?
3. Bewertung ob ein Dämpfungseinfluss auf den Laserpuls gewichtet werden soll auf Grund der Messung des Punktes aus unterschiedlicher Flughöhe gegenüber dem Startpunkt Xs?
4. Liegt die zu dem Messpunkt Xm zugehörige Messung Mj als Full-Waveformaufzeichnung vor?
5. Hat der Messpunkt Xm eine ähnliche Amplitude bzw. einen ähnlichen Reflexionskoeffizienten wie der nächstliegende Startpunkt Xs?
6. Befindet sich der Messpunkt Xm im horizontalen Suchumfeld unterhalb des nächstliegende Startpunktes Xs und nicht in der Klasse Trübungsschleier (Messpunkte ohne Detektion der Wasseroberfläche, Punkte denen Wasseroberflächenlage zugewiesen werden muss)?
7. Ist der Messpunkt Xm aus dem gleichen Scanstreifen (zeitlicher Abstand der Messung der Punkte)?
8. Ist der Messpunkt Xm bei der gleichen Taktrate aufgezeichnet worden?
9. Ist die Höhenfehlerkorrektur aus dem Streifenabgleich anzuwenden, wenn es sich um zwei Punkte aus unterschiedlichen Scanstreifen handelt?

Die räumliche Ausdehnung des Trübungsschleiers kann mathematisch in die Klassifikation eingebunden werden, indem beispielsweise nur in einer bestimmten Bandbreite (bspw. -10/+15 cm) von Xs und dann dazu folgend klassifizierten Punkten gesucht wird.

Der zweite Qualitätsindikator Q2 kann indizieren wie hoch die Wahrscheinlichkeit ist, dass der Nachbarpunkt auch ein Wasseroberflächenpunkt ist. Die Anzahl der zutreffenden Merkmale zu allen Merkmalen kann die prozentuale Wahrscheinlichkeit definieren, dass es sich um einen Wasseroberflächenpunkt handelt. Visuell kann das Ergebnis dann derart dargestellt werden, dass z.B. nur Punkte mit einer bestimmten Wahrscheinlichkeit angezeigt werden bzw. als Grundlage für die weitere Berechnung dienen oder die Grundlage für die Korrektur liefern.

Vorzugsweise kann bei fehlender Detektion der Wasseroberfläche diese als virtueller Wasseroberflächenpunkt auf Grundlage von Informationen aus Nachbarpunkten oder aus externen Datenerhebungen (z.B. Pegel) festgelegt werden. Ebenso kann in Abhängigkeit der Qualität des ermittelten Wasseroberflächenpunktes entschieden werden, ob dieser als Wasseroberflächenpunkt für die Refraktion verwendet wird oder durch einen virtuellen Wasseroberflächenpunkt ersetzt wird, dessen Informationen aus der unmittelbaren Nachbarschaft kommen und eine bessere qualitative Bewertung besitzen.

Bevorzugt wird die Korrektur von Refraktion und Laufzeit für die Messpunkte Xm, die zeitlich nach dem ermittelten oder virtuellen Messpunkt der Wasseroberfläche liegen, auf Grundlage der als Wasseroberfläche charakterisierten Messpunkte durchgeführt und den physikalischen Methoden zur Berechnung der Brechung und Laufzeit von Licht in Wasser unterworfen. Für eine vereinfachte Durchführung der Refraktion und Laufzeitkorrektur wird auf Grundlage der ermittelten Wasserspiegellagepunkte ein Wasserspiegellageoberflächenmodell generiert. Eingang in die Generierung dieses Oberflächenmodels findet das 95%-Fraktil oder größer aller Wasserspiegelpunkte.

Dabei gilt:

$$\frac{\sin \alpha\, air}{\sin \alpha\, water} = \frac{c\, air}{c\, water} = \frac{n\, water}{n\, air}$$

mit c = Ausbreitungsgeschwindigkeit Licht in Luft bzw. Wasser.

$\alpha_{air}$ = Auftreffwinkel Laserstrahl zum Normalenvektor

c = Brechungsindex in Luft / Wasser bei entsprechender Wellenlänge

$\alpha_{water}$ = Brechungswinkel im dichteren Medium und

n=Brechungsindex (in Wasser etwa 1,33, da die Lichtgeschwindigkeit in Luft etwa 1/3 größer als in Wasser ist.

Ferner gilt:

$$Px = px + dair \frac{\Delta tair * cair}{2} + dwater \frac{\Delta twater * cwater}{2}$$

mit Px = 3d-Position (x) des Messpunkts

px = 3d-Position (x) der Laserquelle

$\Delta$tair bzw. $\Delta$twater = Hin- und Rücklaufzeit des Lichts in Luft und Wasser und dair und dwater = Richtungsvektor des Laserstrahls

Verfahren gemäß einem Aspekt

Ein Aspekt betrifft ein Verfahren zur Kartierung der Erdoberfläche mittels eines topobathymetrischen Datensatzes mit folgenden Schritten:

- Bereitstellen eines topobathymetrischen Datensatzes mit zumindest einem topographischen Messpunkt Xm;
- Klassifizieren jedes des zumindest einen Messpunkts mit dem erfindungsgemäßen Klassifikationsverfahren, ob der Messpunkt Xm die geometrische Position der Wasseroberfläche beschreibt oder nicht, und wenn ja, dann Ausgabe des Messpunktes Xm als geometrische Position der Wasseroberfläche.

Das Verfahren kann insbesondere gemäß dieser Reihenfolge durchgeführt werden: 1. Festlegung der Startinformationen, 2. Tensorfeldberechnung, 3. Auswertung der nachbarschaftlichen und räumlichen Beziehungen vom Startpunkt zum nächsten Punkt, 4. Bewertung der Qualität der nachbarschaftlichen und räumlichen Beziehungen von Startpunkt zum nächsten Punkt zur Festlegung der Klasse der Wasseroberfläche zuzüglich weiterer Metadaten-Messinformationen, 5. Klassifizierung des Punktes als Wasseroberfläche bzw. Zuweisung eines neuen Punktes als virtueller Wasseroberflächenpunkt bei fehlender Detektion des Punktes und 6. Anwendung der Korrektur von Refraktion und Laufzeit auf Messpunkte die zeitlich nach dem ermittelten oder virtuellen Messpunkt der Wasseroberfläche liegen.

System gemäß einem Aspekt

Ein Aspekt der Erfindung betrifft ein System zur Durchführung eines computergestützten Verfahrens zur Klassifikation von Messpunkten in einem topobathymetrischen Datensatz, wobei das System aufweist:

- Mittel zum Erhalten eines topobathymetrischen Datensatzes;
- Mittel zum Erhalten von klassifizierten topographischen Startpunkten Xs;
- Mittel zum Ausführen des erfindungsgemäßen Verfahrens.

Bevorzugt kann das System Bestandteil eines luftgestützten Messsystems sein.

Computerprogramprodukt gemäß einem Aspekt

Ein Aspekt der Erfindung betrifft ein Computerprogramprodukt zur Klassifikation von Messpunkten in einem topobathymetrischen Datensatz, wobei das Computerprogramprodukt maschinenlesbare und maschinenausführbare Instruktionen aufweist, welche wenn sie auf einem geeigneten System, insbesondere einem erfindungsgemäßen System, geladen sind und ausgeführt werden, ein Verfahren gemäß einem der Ansprüche 1 bis 11 ausführen.

Nachfolgend werden bevorzugte Ausführungsformen anhand der Figuren erläutert. Es zeigt:

Figur 1: eine Messkonfiguration zur Durchführung einer topobathymetrischen Messung;

Figur 2: eine topobathymetrische Punktwolke basierend auf einer Vielzahl von einer topobathymetrischen Messungen;

Figur 3: beispielhafte Festlegungen des Gewässertyps für die Punkte einer Fläche;

Figur 4:  beispielhafte Festlegungen des Suchumfelds bzw. der Uferlinie von Gewässern;

Figur 5:  beispielhafte Festlegungen der erwarteten Geometrie der Gewässersohle;

Figur 6:  eine beispielhafte Bestimmung des Trübungsschleiers an einer Gewässeroberfläche;

Figur 7:  eine beispielhafte Bestimmung der Oberflächenwellen an einer Gewässeroberfläche;

Figur 8:  eine beispielhafte Bestimmung eines Punkt-Verteilungs-Tensors;

Figur 9:  beispielhaftes berechnetes Spherical/Cylindrical Neighborhood Ratio.

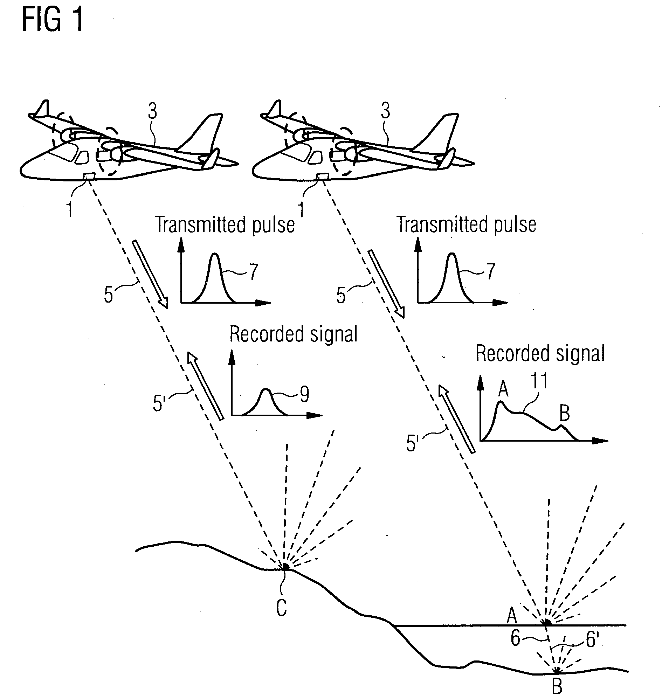

Die Figur 1 zeigt ein beispielhaftes luftgestütztes Messsystem 1 zur Durchführung topobathymetrischer Messungen. In der gezeigten Ausführungsform wird das luftgetragene bzw. luftgestützte Messsystem 1 durch ein Flugzeug 3 getragen. Es versteht sich, dass das Messsystem 1 auch durch ein anderes Luftfahrzeug, beispielsweise einen Hubschrauber oder ein Luftschiff, getragen werden kann oder auf einem Boot geführt werden kann. Das Messsystem 1 umfasst einen Sender zur Ausstrahlung von Laserlicht, welches bevorzugt eine Wellenlänge von 532 nm aufweist. Das Laserlicht kann bevorzugt gepulst sein und Pulsraten von bis zu 512 kHz aufweisen. Die Strahldivergenz des Laserlichts beträgt bevorzugt etwa 1,0 mrad oder weniger. Der von dem Messsystem 1 ausgesandte Laserstrahl 5 trifft auf die Erdoberfläche und wird dort reflektiert, um von einem Empfänger des Messsystems 1 detektiert bzw. registriert zu werden. Die Lichtintensitätsfunktion 7 des gepulsten Laserstrahls 5 weist bevorzugt eine charakteristische Form mit genau einem Maximum auf. Trifft der Laserstrahl 5 auf einen Reflexionspunkt C bzw. einen topographischen Messpunkt C, welcher zu einer Landoberfläche gehört, so entspricht das registrierte Reflexionssignal 9, welches an dem Empfänger des Messsystems 1 registriert wird, im wesentlichen in der Form der Lichtintensitätsfunktion 7 des ausgesandten Laserstrahls 5. Aus der registrierten Ankunftszeit des Maximums des registrierten Reflexionssignals 9 kann die Laufzeit des Laserstrahls 5 vom Messsystem 1 zum Messpunkt C und zurück zum Messsystem 1 berechnet werden, wodurch sich mit Hilfe der Lichtgeschwindigkeit der Abstand zwischen dem Messsystem 1 und dem Messpunkt C ergibt. Mit Hilfe einer bekannten Position des Messsystems 1 kann die Höhe bzw. die Position des Messpunktes C bestimmt werden. Zur Bestimmung der Laufzeit aus dem registierten Reflexionssignal 9 kann das Messsystem ausgelegt sein, das registrierte Reflexionssignal 9 als Zeitreihe zu erfassen und abzuspeichern. Das Abspeichern kann dabei auf jeder Art von Speichermedium erfolgen. Bei begrenzter Speicherkapazität des Speichermediums kann es jedoch erforderlich sein, die abzuspeichernden Datenmenge zu reduzieren. Daher kann vorgesehen sein, das aufgezeichnete registrierte Reflexionssignal 9 zu löschen, wenn der Zeitpunkt des Maximums des registrierten Reflexionssignals 9 bestimmt wurde. Um den Speicherverbrauch zu verringern, wird dann zweckmäßigerweise lediglich die zu dem Maximum zugehörige Zeit abgespeichert. Zusätzlich kann auch die Amplitude des Maximums des registrierten Reflexionssignals abgespeichert werden. In Abhängigkeit von der zeitlichen Abtastrate des registrierten Reflexionssignals 9 kann der Speicherverbrauch zum Abspeichern der Ankunftszeit des Maximums des registrierten Reflexionssignals um mindestens den Faktor 1000 kleiner sein als der Speicherverbrauch für das Abspeichern des vollständigen registrierten Reflexionssignals 9. Die Abtastung kann beispielsweise in Abständen von 50 ns durchgeführt werden.

Für den Fall, dass der vom Messsystem 1 ausgesandte Laserstrahl 5 zunächst in einem Messpunkt A auf eine Wasseroberfläche trifft, wird ein Teil des Laserstrahls 5 an der Wasseroberfläche reflektiert und kann als reflektierter Laserstrahl 5' durch den Empfänger des Messsystems 1 registriert werden. Ein weiterer Teil des ausgesandten Laserstrahls 5 wird im Messpunkt A refraktiert bzw. gebrochen und breitet sich unter Wasser als Laserstrahl 6 aus. Die Brechung des Laserstrahls 5 erfolgt gemäß dem Snelius'schen Brechungsgesetz. Der refraktierte Laserstrahl 6 kann im folgenden im Messpunkt B reflektiert werden, wobei der Messpunkt B auf der Gewässersohle des Gewässers liegt. Der im Messpunkt B reflektierte Laserstrahl 6' wird wiederum an der Wasseroberfläche refraktiert bzw. gebrochen und kann anschließend vom Empfänger des Messsystems 1 registriert werden. Das registrierte Reflexionssignal 11 umfasst daher eine Superposition von zumindest dem an der Wasseroberfläche bzw. im Messpunkt A reflektierten Laserstrahl 5' und dem im Messpunkt B bzw. an der Gewässersohle reflektierten Laserstrahl 6'. Die Superposition der beiden Signale kann in dem registrierten Reflexionssignal 11 zur Ausbildung eines erhöhten Maximums oder zweier voneinander unterscheidbaren Maxima führen. Dies erfolgt in Abhängigkeit von der Gewässertiefe und dem Winkel, mit welchem der ausgesandte Laserstrahl 5 auf die Gewässeroberfläche auftrifft. Ziel der Auswertung des registrierten Reflexionssignals ist sowohl die Bestimmung der Höhe bzw. Position des Messpunktes A an der Wasseroberfläche als auch die Bestimmung des Höhe bzw. Position des Messpunktes B an der Gewässersohle, womit auch die Gewässertiefe bestimmbar ist.

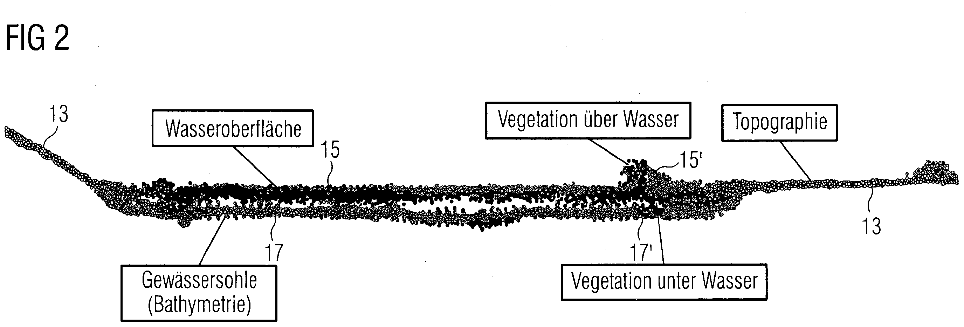

Die Figur 2 zeigt eine topobathymetrische Punktwolke basierend auf einer Vielzahl von topobathymetrischen Messungen, wie sie beispielsweise wie in Figur 1 gezeigt durchgeführt wurden. Jeder der Punkte der in Figur 2 gezeigten Punktfolge repräsentiert die berechnete Position einer Reflexion eines vom Messsystem 1 ausgesandten Laserstrahls 5 an der Landoberfläche, der Wasseroberfläche oder der Gewässersohle. So repräsentieren die Messpunkte 13 die Topographie der Landoberfläche, während die Messpunkte 15 die Position der Wasseroberfläche repräsentieren. Unterhalb der Wasseroberfläche, welche durch die Messpunkte 15 repräsentiert ist, ist die Geometrie der Gewässersohle unterhalb der Wasseroberfläche durch die Messpunkte 17 repräsentiert. Wie aus der Figur 2 ersichtlich, weisen die Positionen der Messpunkte 15 der Wasseroberfläche und die Messpunkte 17 der Gewässersohle im Vergleich zu den Messpunkten 13 der Landoberfläche eine erhöhte Streuung auf. Dies kann zum einen durch an der Wasseroberfläche befindliche Oberflächenwellen bedingt sein, welche die Brechung des Laserstrahls 5 an der Wasseroberfläche lokal verändert, wodurch die Lokalisation des Messpunktes an der Gewässersohle beeinträchtigt wird. Des Weiteren kann der Laserstrahl 5 insbesondere im Uferbereich des Gewässers durch die dort befindliche Vegetation reflektiert werden, wie beispielsweise an den Messpunkten 15'. Entsprechend kann der Laserstrahl auch an der unter Wasser befindlichen Vegetation reflektiert werden, wie beispielsweise die Messpunkte 17'.

Um die in der Figur 2 gezeigte topobathymetrische Punktfolge bestmöglich weiterverarbeiten zu können, wird jedem Messpunkt 13, 15, 17 neben seiner räumlichen Information auch eine Klassifikation seiner Eigenschaft zugeordnet, beispielsweise "Vegetation", "Bodenoberfläche trocken", "Vegetation unter Wasser", "Gewässersohle", usw. Um die bathymetrischen Informationen, das heißt alle Messinformation von der Wasseroberfläche bis hinunter zur Gewässersohle, in einen kombinierten topobathymetrischen Datensatz auswerten zu können, ist die Klassifikation der Wasseroberfläche von besonderer Bedeutung. Erst durch die Bestimmung der Informationsklasse "Wasseroberfläche" ist eine Korrektur der erfassten Messdaten unterhalb der Wasseroberfläche möglich. Insbesondere aufgrund des Einflusses von Refraktion und Laufzeitänderung des Lichts im Wasser sind die ermittelten Laufzeiten der reflektierten Signale und der Laufwege zunächst nicht zur korrekten Berechnung der Position des Reflexionspunktes unterhalb der Wasseroberfläche verwendbar. Vorteilhafterweise erlaubt die Ermittlung der Lage bzw. des Zeitpunktes des Übergangs des Lichts von Luft in Wasser an der Wasseroberfläche eine entsprechende Korrektur und somit eine genaue geometrische Bestimmung der Position des Reflexionspunktes des Lichts unterhalb der Wasseroberfläche, beispielsweise an der Gewässersohle.

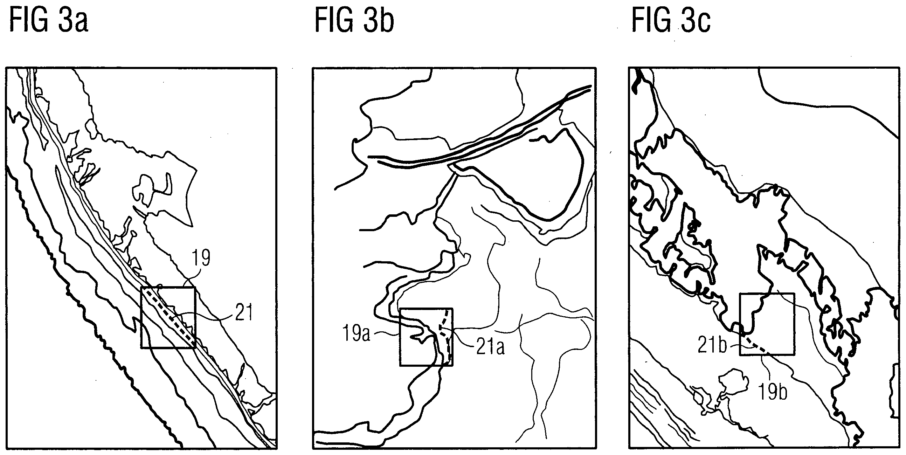

Figur 3 zeigt beispielhafte Festlegungen des Gewässertyps für eine topobathymetrisch erfasste Fläche. Die Figur 3a zeigt beispielsweise einen Ausschnitt 19 einer topobathymetrischen vermessenen Fläche, bei welcher die Uferlinie 21 festgelegt wurde, beispielsweise mittels visueller Inspektion. Die in der Figur 3a gezeigte topobathymetrische Messung wurde an einer Küstenlinie aufgenommen, so dass dem Gewässer links unterhalb der Uferlinie 21 der Gewässertyp "Meer" bzw. "Küste" zugeordnet werden kann. Dieser Gewässertyp kann sich beispielsweise durch eine im wesentlichen vegetationsfreie Uferlinie, einer gleichmäßig gewellten Wasseroberfläche und eine im wesentlichen glatt strukturierte Gewässersohle auszeichnen.

Die Figur 3b zeigt einen Ausschnitt aus einer topobathymetrischen Messung, welche im Bereich des Ufers eines Binnensees durchgeführt wurde. Die Uferlinie 21a wurde in einem Ausschnitt 19a der topobathymetrischen Messung ebenfalls bestimmt, beispielsweise ebenfalls durch eine visuelle Inspektion der Daten. Dem Gewässer links unterhalb der Uferlinie 21a kann der Gewässertyp "stehend" zugeordnet werden, wobei sich dieser Gewässertyp dadurch auszeichnen kann, dass im Bereich der Uferlinie mit einer verstärkten Vegetation oberhalb und unterhalb der Wasseroberfläche zu rechnen ist. Dagegen kann die Wasseroberfläche in der Regel als glatt angenommen werden, während die Gewässersohle eine mittlere Strukturierung aufweisen kann.

Die Figur 3c zeigt eine topobathymetrische Messung eines fließenden Gewässers, welches eine starke Strukturierung des Uferbereichs und der Gewässersohle aufweist. Dies liegt insbesondere daran, dass in dem in Figur 3c gezeigten Abschnitt eine Fischtreppe innerhalb des fließenden Gewässers ausgebildet ist. Die im Ausschnitt in 19b festgelegte Uferlinie 21b trennt das oberhalb rechts gelegene Gewässer, welchem der Gewässertyp "fließend" zugeordnet werden kann, von dem Uferbereich. Der Gewässertyp "fließend" kann sich insbesondere durch eine unregelmäßige Form der Sohle des Gewässers auszeichnen. Weiter ist die Wasseroberfläche in der Regel nicht eben, sondern kann durch heraustretende kleinräumige Objekte, wie beispielsweise Felsen, gestört sein.

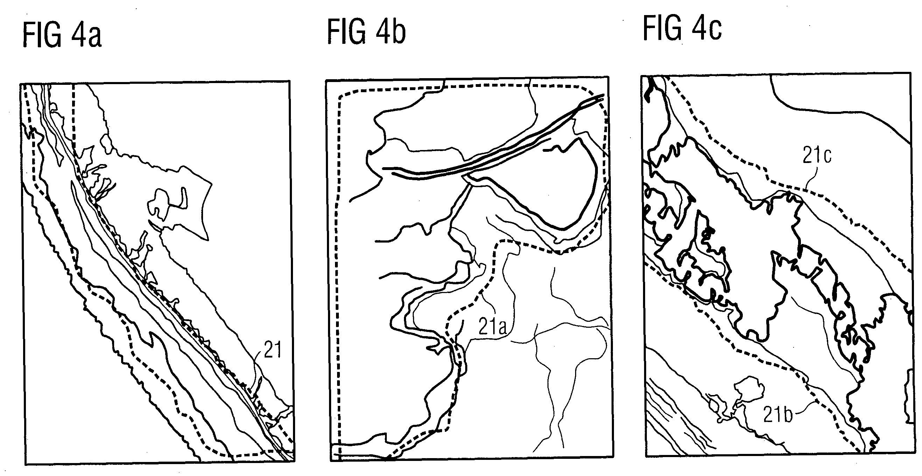

Die Figur 4 zeigt die Festlegung des Suchumfelds bzw. der Uferlinie der in Figur 3 gezeigten Gewässer. In Figur 4a wurde die Küstenlinie 21 durch eine visuelle Inspektion der Daten vorläufig festgelegt. Ebenso wurde die Uferlinie 19a in der Figur 4b durch visuelle Inspektion vorläufig festgelegt, wobei beispielsweise Schilfgürtel und ähnliches der Gewässerfläche zugerechnet werden können. Wie in Figur 4c gezeigt, kann ein Gewässer auch zwei Uferlinien 21b, 21c aufweisen, insbesondere wenn es sich um ein fließendes Gewässer handelt.

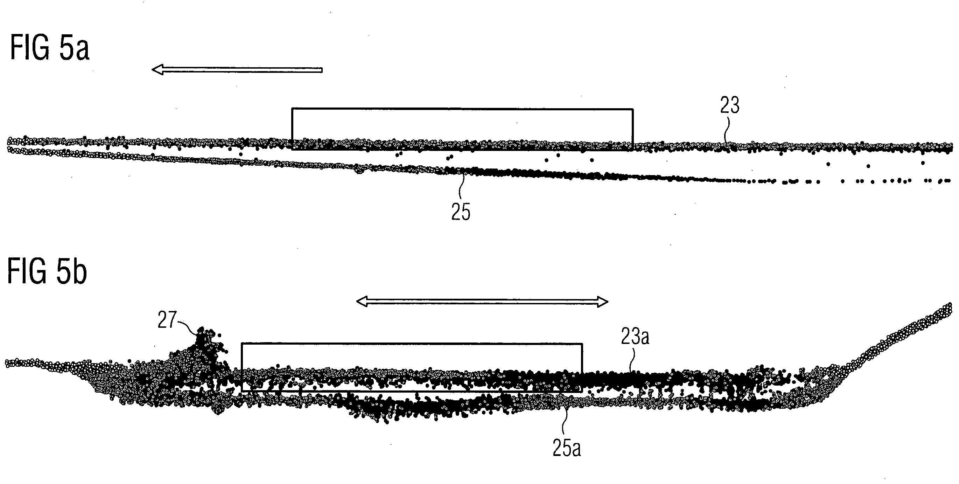

Die Figur 5 zeigt eine beispielhafte Festlegung der erwarteten Geometrie der Gewässersohle. In der Figur 5a ist ein Gewässer vom Typ "Meer" bzw. "Küste" gezeigt, wobei das Gewässer eine im wesentlichen ebene Wasseroberfläche 23 aufweist und eine ebenfalls im wesentlichen ebene Gewässersohle 25, welche in einem Winkel zur Wasseroberfläche 23 nach rechts hin abfällt. Die Figur 5b zeigt ein Gewässer vom Typ "Fließgewässer" bzw. "fließend", welches eine strukturierte wellige Wasseroberfläche 23a aufweist und eine ebenso variable bzw. strukturierte Gewässersohle 25a. Des weiteren zeichnet sich das Ufer des Gewässers dahingehend aus, dass die Vegetation am Uferrand durch die Messpunkte 27 abgebildet wird, wobei die Messpunkte 27 in einer stark strukturierten kompakten Struktur angeordnet sind, welche das Ermitteln einer Oberfläche erschwert. Mit anderen Worten weisen die Messpunkte 23a und 25a der Wasseroberfläche bzw. der Gewässersohle des Fließgewässers eine größere vertikale Varianz auf, als dies für die Messpunkte 23 der Wasseroberfläche bzw. der Messpunkte 25 der Gewässersohle eines Küstenabschnitts, wie in Figur 5a gezeigt, der Fall ist.

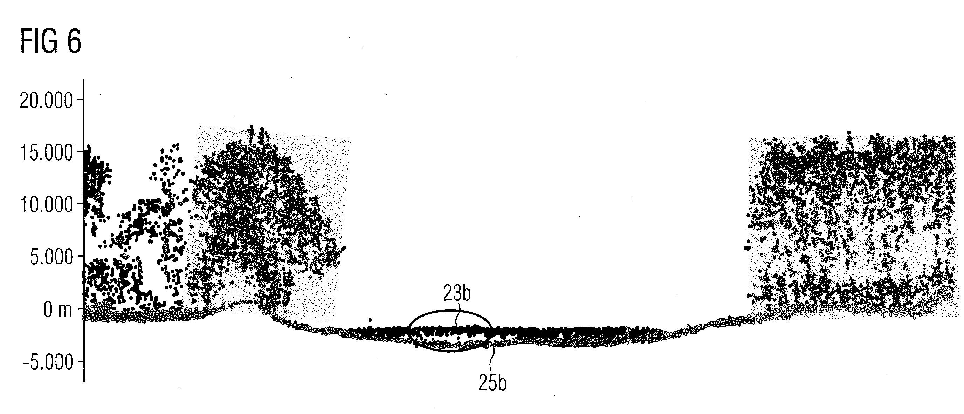

Die Figur 6 zeigt eine beispielhafte Bestimmung des Trübungsschleiers bzw. Penetrationsschleiers an einer Gewässeroberfläche. Der einfallende Lichtstrahl wird nicht an einer scharf definierten Wasseroberfläche reflektiert, sondern vielmehr in einem Bereich von mehreren Zentimetern, so dass ein von einem Messsystem registriertes Reflexionssignal eine zeitliche Verbreiterung bzw. Verschiebung gegenüber dem vom Messsystem ausgesandten Lichtsignal erfährt. Bei Kenntnis der räumlichen Ausdehnung des Trübungsschleiers kann dieser Effekt bei der Auswertung der registrierten Reflexionssignale, das heißt bei der Bestimmung der geometrischen Position der Messpunkte an der Wasseroberfläche und an der Gewässersohle berücksichtigt werden. Wie in der Figur 6 zu sehen, weisen die Messpunkte 23b an der Wasseroberfläche eine erhöhte vertikale Streuung aufgrund des Trübungs- bzw. Penetrationsschleiers auf.

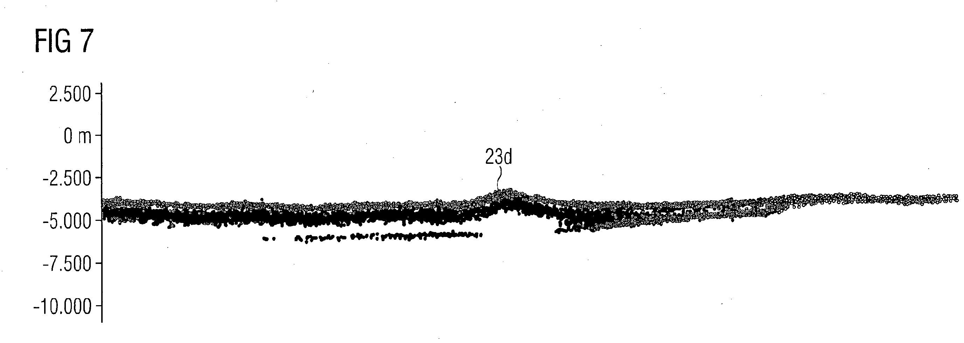

Die Figur 7 zeigt eine beispielhafte Bestimmung der Oberflächenwellen 23d an einer Gewässeroberfläche. Die Welligkeit der Gewässeroberfläche sorgt nicht nur für eine vertikale Varianz der Messpunkt 23d der Gewässeroberfläche sondern sorgt auch für eine lokale und zeitliche Variation des Refraktionsverhaltens des Lichtstrahls an der Gewässeroberfläche, so dass mittelbar durch die Welligkeit der Gewässeroberfläche auch die Lokalisierung der Gewässersohle beeinflusst wird.

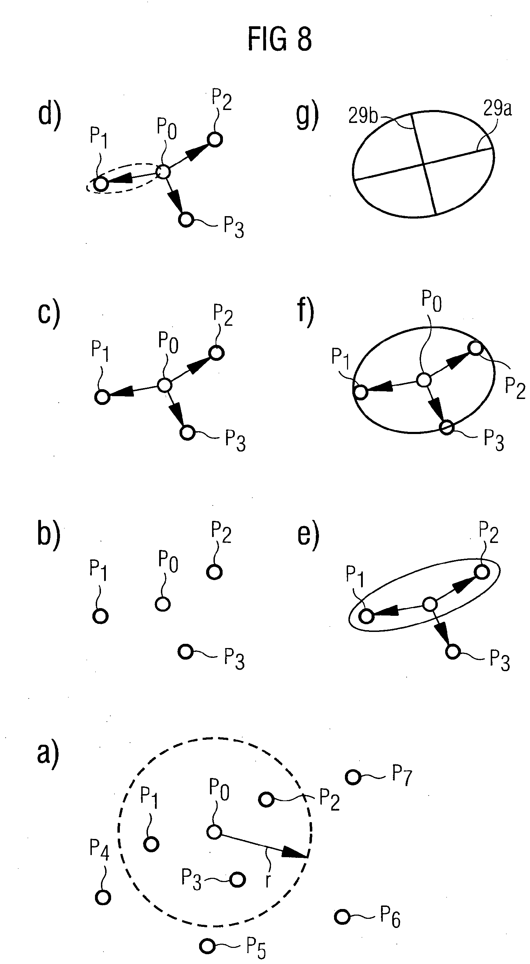

Die Figur 8 zeigt eine beispielhafte Bestimmung eines Punktverteilungstensors um einen Punkt P0. In der Figur 8a ist die Verteilung von acht Punkten P0 bis P7 gezeigt. Für die Punkte innerhalb eines Radius r um den Punkt P0 herum soll der Punktverteilungstensor berechnet werden. Dazu werden die entsprechenden Gewichte $\omega_{ik}$ der Gewichtsfunktionen bestimmt.

Wie in Figur 8b gezeigt verbleiben um den Punkt P0 herum lediglich die Punkte P1, P2 und P3 auf deren Grundlage der Punktverteilungstensor berechnet wird. Dazu werden wie in Figur 8c gezeigt die Differenzvektoren Tika zwischen den Punkten P0 bis P3 bestimmt. Die Figur 8d zeigt den Punktverteilungstensor unter Berücksichtigung der Punkte P0 und P1, Figur 8e unter Berücksichtigung der Punkte P0, P1 und P2 und Figur 8f unter Berücksichtigung der Punkte P0, P1, P2 und P3. Die Figur 8g zeigt den resultierenden Punktverteilungstensor und dessen zwei Hauptachsen 29a und 29b.

Der Punktverteilungstensor wird gemäß der Formel:

$$S(P_i) = \frac{1}{n} \sum_{k=0}^{n-1} \omega_{ik} (t_{ik} \otimes t^{T}_{ik}) \qquad (1)$$

mit $t_{ik} = P_i - P_k$ für alle k=0 bis k=n-1 mit den Punkten $P_{i=0...n}$ berechnet.

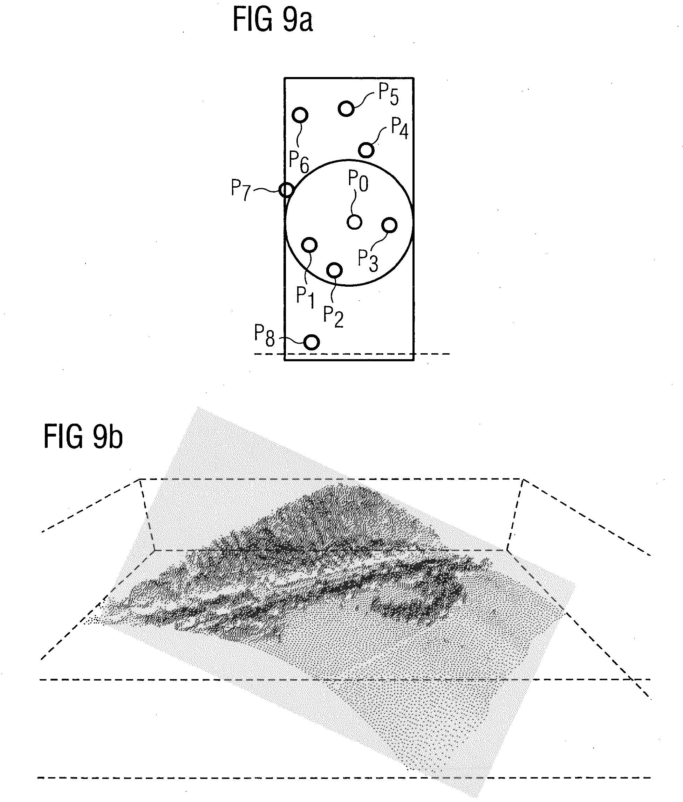

Die Figur 9 zeigt ein beispielhaft berechnetes "Spherical/Cylindrical Neighborhood Ratio". Die Figur 9a zeigt die zur Verwendung des in Figur 9b gezeigten "Spherical/Cylindrical Neighborhood Ratios" verwendete Punktmenge P0 bis P8.

Bezugszeichenliste

| | |
|---|---|
| 1 | luftgestütztes Messsystem |
| 3 | Luftfahrzeug |
| 5 | ausgesandter Laserstrahl |
| 5' | reflektierter Laserstrahl |
| 6 | refraktierter Laserstrahl |
| 6' | reflektierter Laserstrahl |
| 7 | Lichtintensitätsfunktion 7 des Laserstrahls 5 |
| 9 | Reflexionssignal |
| 11 | Reflexionssignal |
| 13 | Messpunkte der Landoberfläche |
| 15 | Messpunkte der Wasseroberfläche |
| 17 | Messpunkte der Gewässersohle |
| 19 | Ausschnitt |
| 19a | Ausschnitt |
| 19b | Ausschnitt |
| 21 | Uferlinie |
| 21a | Uferlinie |
| 21b | Uferlinie |
| 21c | Uferlinie |
| 23 | Wasseroberfläche |
| 23a | Wasseroberfläche |
| 23b | Wasseroberfläche |
| 23d | Wasseroberfläche |

| 25 | Gewässersohle |
|---|---|
| 25a | Gewässersohle |
| 25b | Gewässersohle |
| 27 | Messpunkte der Vegetation |
| 29a | Hauptachse des Punktverteilungstensors |
| 29b | Hauptachse des Punktverteilungstensors |
| A | Messpunkt an der Wasseroberfläche |
| B | Messpunkt an der Gewässersohle |
| C | Messpunkt an Land |

**Patentansprüche**

1. Verfahren, insbesondere ein computergestütztes Verfahren, zur Klassifikation von Messpunkten in einem topobathymetrischen Datensatz mit folgenden Schritten:

   - Erhalten eines topobathymetrischen Datensatzes, der zumindest eine topobathymetrischen Messung (Mj) mit einem registrierten Reflexionssignal ($R_{t1}$) zur Zeit t1 enthält, woraus ein topographischer Messpunkt (Xm) berechnet wird;
   - Erhalten von klassifizierten Startpunkten (Xs) mit zumindest der bekannten Eigenschaft, ob der jeweilige Startpunkt (Xs) zu einer Wasseroberfläche oder zu einer Landoberfläche gehört;
   - Berechnen eines ersten Qualitätsindikators (Q1) als Funktion der Abstände zwischen dem Messpunkt (Xm) und den Startpunkten (Xs);
   - Berechnen eines zweiten Qualitätsindikators (Q2) basierend auf der zumindest einen topobathymetrischen Messung (Mj), die zur Berechnung des Messpunktes (Xm) diente, als Funktion eines oder mehrerer der folgenden Merkmale:

      - des zum Reflexionssignal ($R_{t1}$) gehörigen ersten Reflexionskoeffizienten ($R_{x1}$);
      - zumindest eines weiteren registrierten Reflexionssignals ($R_{t2}$) zur Zeit t2;
      - des zeitlichen Abstands t2-t1 zwischen beiden Reflexionssignalen ($R_{t1}$, $R_{t2}$);
      - den zum Reflexionssignal ($R_{t2}$) gehörigen zweiten Reflexionskoeffizient ($R_{x2}$);
      - eines Reflexionskoeffizienten ($R_{xs}$) eines der Startpunkte (Xs), bevorzugt des Startpunkts mit dem geringsten Abstand zum Messpunkt (Xm);
      - Berechnen einer binären Klassifikationsfunktion (H) in Abhängigkeit von dem ersten und zweiten Qualitätsindikator (Q1, Q2);
      - Klassifizieren des Messpunkts (Xm) als Landoberfläche oder Wasseroberfläche auf Grundlage der Klassifikationsfunktion (H).

2. Verfahren gemäß Anspruch 1, wobei die Berechnung des ersten Qualitätsindikators (Q1) eine Tensorfeldberechnung umfasst, um einen räumlichen Bezug der Messpunkte (Xm) und der Startpunkte (Xs) zueinander zu bekommen.

3. Verfahren gemäß Anspruch 1 oder 2, wobei die Berechnung des ersten Qualitätsindikators (Q1) eine Berechnung des Spherical/Cylindrical Neighborhood Ratio umfasst.

4. Verfahren gemäß einem der vorigen Ansprüche, wobei das Bereitstellen der Startpunkte (Xs) das Bestimmen bzw. Festlegen einer oder mehrerer der folgenden Eigenschaften für jeden der Startpunkte (Xs) umfasst:

   1. Eigenschaft des Gewässers;
   2. Radius des horizontalen Suchumfelds um den jeweiligen Startpunkt (Xs), in welchem nachbarschaftliche Beziehungen angenommen werden können;
   3. Radius des vertikalen Suchumfelds um den jeweiligen Startpunkt (Xs), in welchem nachbarschaftliche Beziehungen angenommen werden können;
   4. relative Position des Startpunktes (Xs) zur nächstliegenden bekannten oder geschätzten Uferlinie oder zu mehreren Uferlinien;
   5. geschätzte Punktdichten im Bereich des Wasserkörpers.
   6. geschätzte Trübung im Bereich des Wasserkörpers;
   7. zeitliche Korrektur durch eindringtiefenbedingte Messfehler, insbesondere verursacht durch Trübungs- bzw. Penetrationsschleier.

**5.** Verfahren gemäß einem der vorigen Ansprüche, wobei das Berechnen des ersten Qualitätsindikators (Q1) eine Auswertung von zumindest einer der folgenden nachbarschaftlichen und räumlichen Beziehungen umfasst:

1. Liegen Punkte in der Nachbarschaft im definierten räumlichen Abstand zum Startpunkt (Xs);

2. Berechnung des horizontalen und/oder vertikalen Abstandes der Startpunkte (Xs) und des zumindest einen Messpunktes (Xm) zueinander auf Grundlage der Tensorfeldberechnung. Insbesondere Berechnung, ob der zumindest eine Messpunkt (Xm) von einem Startpunkt (Xs) aus in Richtung eines Ufers liegt und, falls zwei Ufer vorhanden sind, in Richtung welchen Ufers;

3. Bestimmen, ob die topobathymetrische Messung (Mj), die zur Berechnung des Messpunktes (Xm) diente, zumindest ein weiteres registriertes Reflexionssignal aufweist, welches zeitlich später registriert wurde. Für den Fall, dass ein zeitlicher Nachfolger registriert wurde, welcher einen geometrisch tieferen Punkt repräsentiert, kann bestimmt werden, dass der tiefere Punkt in der Klasse Trübungsschleier liegt;

4. Bestimmen des Höhenunterschieds zwischen der Flughöhe bzw. räumlichen Position der Laserquelle und des Empfängers während der Registrierung der zu den Startpunkten zugehörigen Messungen und der Flughöhe bzw. räumlichen Position der Laserquelle und des Empfängers während der Registrierung der zu dem benachbarten Messpunkt (Xm) zugehörigen Messung (Mj);

5. Bestimmen eines Höhenfehlers aus einem Streifenabgleich, für den Fall, dass es sich bei den Messpunkten (Xm) und Startpunkten (Xs) um Punkte handelt, die auf Grundlage von Messungen (Mj) aus unterschiedlichen Scanstreifen herrühren;

6. Berechnen des Abstandes des Messpunktes (Xm) von der Uferlinie, welche vorher bei der Bereitstellung der Startpunkte (Xs) manuell geschätzt bzw. gekennzeichnet wurde;

7. Berechnen der Punktdichte und Berechnen der Punktdichte innerhalb des vertikalen und/oder horizontalen Suchumfeldes. Insbesondere kann der Suchkörper durch Voxel, durch Zylinder, durch Kreise o.ä. bestimmt werden;

8. Berechnen der vertikalen Verteilung und/oder Positionierung des Messpunktes (Xm), wenn dieser innerhalb des Penetrations- und Trübungsschleiers liegt;

9. Quantifizieren anhand der Tensorfeldberechnung, wie gut ein Nachbarpunkt auf einer Ebene zum Startpunkt (Xs) liegt;

10. Auswerten des Spherical/Cylindrical Neighborhood Ratio.

**6.** Verfahren gemäß einem der vorigen Ansprüche, wobei das Berechnen des zweiten Qualitätsindikators (Q2) eine Auswertung von zumindest einer der folgenden nachbarschaftlichen und/oder räumlichen Beziehungen umfasst:

1. Hat der Messpunkt des gefundenen Punktes einen zeitlichen Nachfolger im gleichen Messstrahl

2. Hat der Messpunkt des gefundenen Punktes einen zeitlichen Vorgänger im gleichen Messstrahl

3. Bewertung ob ein Dämpfungseinfluss auf den Laserpuls gewichtet werden soll auf Grund der Messung (Mj) des Punktes aus unterschiedlicher Flughöhe gegenüber dem Seedpunkt

4. Liegt die zu dem Messpunkt (Xm) zugehörige Messung (Mj) als Full-Waveformaufzeichnung vor?

5. Hat der Messpunkt (Xm) eine ähnliche Amplitude bzw. einen ähnlichen Reflexionskoeffizienten wie der nächstliegende Startpunkt (Xs)?

6. Ist der Messpunkt (Xm) im horizontalen Suchumfeld unterhalb des nächstliegende Startpunkts(Xs) und nicht in der Klasse Trübungsschleier?

7. Ist der Messpunkt Xm aus dem gleichen Scanstreifen?

8. Ist der Messpunkt bei der gleichen Taktrate aufgezeichnet worden?

9. Ist die Höhenfehlerkorrektur aus Streifenabgleich anzuwenden wenn es sich um zwei Punkte aus unterschiedlichen Scanstreifen handelt?

**7.** Verfahren nach Anspruch 6, wobei der zweite Qualitätsindikator (Q2) indiziert, welche Anzahl der nachbarschaftlichen, räumlichen Beziehungen zutreffen.

**8.** Verfahren nach einem der vorigen Ansprüche, wobei bei fehlender Detektion der Wasseroberfläche diese als virtueller Wasseroberflächenpunkt klassifiziert wird.

**9.** Verfahren nach Anspruch 8, wobei eine Korrektur von Refraktion und Laufzeit für die Messpunkte (Xm), die zeitlich nach dem ermittelten oder virtuellen Messpunkt (Xm) der Wasseroberfläche liegen, auf Grundlage der als Wasseroberfläche charakterisierten Messpunkte durchgeführt und den physikalischen Methoden zur Berechnung der Brechung und Laufzeit von Licht in Wasser unterworfen.

10. Verfahren zur Kartierung der Erdoberfläche mittels eines topobathymetrischen Datensatzes mit folgenden Schritten:

- Bereitstellen eines topobathymetrischen Datensatzes mit zumindest einem topographischen Messpunkt (Xm);
- Klassifizieren jedes des zumindest einen Messpunkts (Xm) mit einem Verfahren gemäß einem der Ansprüche 1 bis 9, ob der Messpunkt (Xm) die geometrische Position einer Wasseroberfläche beschreibt oder nicht, und wenn ja, dann Ausgabe des Messpunktes (Xm) als geometrische Position der Wasseroberfläche.

11. System zur Durchführung eines computergestützten Verfahrens zur Klassifikation von topographischen Messpunkten (Xm) in einem topobathymetrischen Datensatz, wobei das System aufweist:

- Mittel zum Erhalten eines topobathymetrischen Datensatzes;
- Mittel zum Erhalten von klassifizierten topographischen Startpunkten (Xs);
- Mittel zum Ausführen eines Verfahrens gemäß einem der Ansprüche 1 bis 10.

12. Computerprogrammprodukt zur Klassifikation von topographischen Messpunkten (Xm) in einem topobathymetrischen Datensatz, wobei das Computerprogrammprodukt maschinenlesbare und maschinenausführbare Instruktionen aufweist, welche wenn sie auf einem geeigneten System geladen sind und ausgeführt werden, ein Verfahren gemäß einem der Ansprüche 1 bis 10 ausführen.

**Claims**

1. A method, in particular a computerized method, for classifying measuring points in a topobathymetric data set, having the following steps:

- obtaining a topobathymetric data set which contains at least one topobathymetric measurement (Mj) having a registered reflection signal ($R_{t1}$) at time t1, from which a topographical measuring point (Xm) is calculated;
- obtaining classified starting points (Xs) having at least the known property of whether the respective starting point (Xs) belongs to a water surface or to a land surface;
- calculating a first quality indicator (Q1) as a function of the distances between the measuring point (Xm) and the starting points (Xs);
- calculating a second quality indicator (Q2) based on the at least one topobathymetric measurement (Mj) which was used to calculate the measuring point (Xm) as a function of one of more of the following features:

- the first reflection coefficient ($R_{x1}$) associated with the reflection signal ($R_{t1}$);
- at least one further registered reflection signal ($R_{t2}$) at time t2;
- the time interval t2-t1 between two reflection signals ($R_{t1}$, $R_{t2}$);
- the second reflection coefficient ($R_{x2}$) associated with the reflection signal ($R_{t2}$);
- a reflection coefficient ($R_{xs}$) of one of the starting points (Xs), preferably of the starting point having the smallest distance from the measuring point (Xm);

- calculating a binary classification function (H) as a function of the first and second quality indicator (Q1, Q2);
- classifying the measuring point (Xm) as a land surface or water surface on the basis of the classification function (H).

2. The method according to Claim 1, wherein the calculation of the first quality indicator (Q1) comprises a tensor field calculation in order to obtain a spatial relationship of the measuring points (Xm) and the starting points (Xs) to each other.

3. The method according to Claim 1 or 2, wherein the calculation of the first quality indicator (Q1) comprises a calculation of the Spherical/Cylindrical Neighborhood Ratio.

4. The method according to any one of the preceding claims, wherein providing the starting points (Xs) comprises determining or respectively specifying one or more of the following properties for each of the starting points (Xs):

1. Property of the waterbody;
2. Radius of the horizontal search environment around the respective starting point (Xs), in which neighborly relationships can be assumed;

3. Radius of the vertical search environment around the respective starting point (Xs), in which neighborly relationships can be assumed;

4. Relative position of the starting point (Xs) to the nearest known or estimated shoreline or to multiple shorelines;

5. Estimated point densities in the area of the body of water;

6. Estimated turbidity in the area of the body of water;

7. Temporal correction due to penetration depth-related measurement errors, in particular caused by turbidity or respectively penetration hazes.

5. The method according to any one of the preceding claims, wherein the calculation of the first quality indicator (Q1) comprises an evaluation of at least one of the following neighborly and spatial relationships:

1. Points in the neighborhood lie in the defined spatial distance from the starting point (Xs);

2. Calculation of the horizontal and/or vertical distance of the starting points (Xs) and the at least one measuring point (Xm) from each other on the basis of the tensor field calculation. In particular, calculation of whether the at least one measuring point (Xm) lies in the direction of a bank from a starting point (Xs) and, if there are two banks, in the direction of which bank;

3. Determining whether the topobathymetric measurement (Mj) which was used to calculate the measuring point (Xm) has at least one further registered reflection signal which was registered at a later time. In the event that a temporal successor has been registered which represents a geometrically lower point, it can be determined that the lower point lies in the turbidity haze class;

4. Determining the height difference between the altitude or respectively spatial position of the laser source and the receiver during the registration of the measurements associated with the starting points and the altitude or respectively spatial position of the laser source and the receiver during the registration of the measurement (Mj) associated with the neighboring measuring point (Xm);

5. Determining a height error from a strip match, in the event that the measuring points (Xm) and starting points (Xs) are points which are derived on the basis of measurements (Mj) from different scanning strips;

6. Calculating the distance of the measuring point (Xm) from the shoreline which was previously estimated manually or respectively characterized during the provision of the starting points (Xs);

7. Calculating the point density and calculating the point density within the vertical and/or horizontal search environment. In particular, the search body can be determined by voxels, by cylinders, by circles or similar;

8. Calculating the vertical distribution and/or positioning of the measuring point (Xm) if this is located within the penetration and turbidity haze;

9. Quantifying how well a neighbor point lies on a plane to the starting point (Xs) with reference to the tensor field calculation;

10. Evaluating the Spherical/Cylindrical Neighborhood Ratio.

6. The method according to any one of the preceding claims, wherein the calculation of the second quality indicator (Q2) comprises an evaluation of at least one of the following neighborly and/or spatial relationships:

1. Does the measuring point of the point found have a temporal successor in the same measuring beam?

2. Does the measuring point of the point found have a temporal predecessor in the same measuring beam?

3. Assessment of whether an attenuation effect on the laser pulse is to be weighted on account of the measurement (Mj) of the point from a different altitude relative to the seed point.

4. Is the measurement (Mj) associated with the measuring point (Xm) available as a full waveform recording?

5. Does the measuring point (Xm) have a similar amplitude or respectively a similar reflection coefficient to the nearest starting point (Xs)?

6. Is the measuring point (Xm) in the horizontal search environment below the nearest starting point (Xs) and not in the turbidity haze class?

7. Is the measuring point (Xm) from the same scanning strip?

8. Has the measuring point been recorded at the same clock rate?

9. Is the height error correction from strip matching to be applied, if there are two points from different scanning strips?

7. The method according to Claim 6, wherein the second quality indicator (Q2) indicates what number of the neighborly spatial relationships apply.

8. The method according to any one of the preceding claims, wherein if the water surface is not detected, the latter is classified as a virtual water surface point.

9.  The method according to Claim 8, wherein a correction of the refraction and transit time for the measuring points (Xm), which lie temporally after the determined or virtual measuring point (Xm) of the water surface, is performed on the basis of the measuring points characterized as the water surface and is subjected to the physical methods for calculating the refraction and transit time of light in water.

10. A method for mapping the earth's surface by means of a topobathymetric data set, having the following steps:

    - providing a topobathymetric data set with at least one topographical measuring point (Xm);
    - classifying each of the at least one measuring point (Xm) with a method according to any one of Claims 1 to 9, whether the measuring point (Xm) describes the geometric position of a water surface or not and, if yes, then outputting the measuring point (Xm) as a geometric position of the water surface.

11. A system for performing a computerized method for classifying topographic measuring points (Xm) in a topobathymetric dataset, wherein the system has:

    - means for obtaining a topobathymetric data set;
    - means for obtaining classified topographical starting points (Xs);
    - means for carrying out a method according to any one of Claims 1 to 10.

12. A computer program product for classifying topographic measuring points (Xm) in a topobathymetric data set, wherein the computer program product has machine-readable and machine-executable instructions which, when they are loaded on a suitable system and run, carry out a method according to any one of Claims 1 to 10.

**Revendications**

1.  Procédé, en particulier un procédé assisté par ordinateur, pour la classification de points de mesure dans un jeu de données topo-bathymétrique, comprenant les étapes suivantes :

    - obtention d'un jeu de données topo-bathymétrique contenant au moins une mesure topo-bathymétrique (Mj) avec un signal de réflexion enregistré ($R_{t1}$) à l'instant t1, à partir duquel est calculé un point de mesure topographique (Xm) ;
    - obtention de points de départ classés (Xs) avec au moins la propriété connue d'appartenance du point de départ (Xs) respectif à une surface d'eau ou à une surface de terre ;
    - calcul d'un premier indicateur de qualité (Q1) comme fonction des distances entre le point de mesure (Xm) et les points de départ (Xs) ;
    - calcul d'un deuxième indicateur de qualité (Q2) sur la base de l'au moins une mesure topo-bathymétrique (Mj) ayant servi à calculer le point de mesure (Xm), comme fonction d'une ou plusieurs des caractéristiques suivantes :

        - le premier coefficient de réflexion ($R_{x1}$) associé au signal de réflexion ($R_{t1}$) ;
        - au moins un autre signal de réflexion enregistré ($R_{t2}$) à l'instant t2 ;
        - l'intervalle de temps t2-t1 entre les deux signaux de réflexion ($R_{t1}$, $R_{t2}$) ;
        - le deuxième coefficient de réflexion ($R_{x2}$) associé au signal de réflexion ($R_{t2}$) ;
        - un coefficient de réflexion ($R_{xs}$) de l'un des points de départ (Xs), de préférence du point de départ présentant la plus petite distance par rapport au point de mesure (Xm) ;

    - calcul d'une fonction de classification binaire (H) en fonction des premier et deuxième indicateurs de qualité (Q1, Q2) ;
    - classification du point de mesure (Xm) comme surface de terre ou surface d'eau sur la base de la fonction de classification (H).

2.  Procédé selon la revendication 1, dans lequel le calcul du premier indicateur de qualité (Q1) comporte un calcul de champ tensoriel, permettant d'obtenir un rapport spatial des points de mesure (Xm) et des points de départ (Xs) entre eux.

3.  Procédé selon la revendication 1 ou 2, dans lequel le calcul du premier indicateur de qualité (Q1) comporte un calcul du rapport de voisinage sphérique/cylindrique.

**4.** Procédé selon l'une des revendications précédentes, dans lequel la mise à disposition des points de départ (Xs) comporte la détermination ou la fixation d'une ou de plusieurs des propriétés suivantes pour chacun des points de départ (Xs) :

1. Propriété de l'étendue d'eau ;
2. Rayon du milieu de recherche horizontal autour du point de départ (Xs) respectif, dans lequel des rapports de voisinage peuvent être admis ;
3. Rayon du milieu de recherche vertical autour du point de départ (Xs) respectif, dans lequel des rapports de voisinage peuvent être admis ;
4. Position relative du point de départ (Xs) par rapport à la ligne de rivage connue la plus proche ou à plusieurs lignes de rivage ;
5. Densité de points estimée dans la région de la messe d'eau ;
6. Turbidité estimée dans la région de la masse d'eau ;
7. Correction temporelle par erreurs de mesure dépendantes de la profondeur de pénétration, en particulier occasionnées par des voiles de turbidité ou de pénétration.

**5.** Procédé selon l'une des revendications précédentes, dans lequel le calcul du premier indicateur de qualité (Q1) comporte une évaluation de l'un au moins des rapports de voisinage et spatiaux :

1. Points situés dans le voisinage sur la distance spatiale définie par rapport au point de départ (Xs) ;
2. Calcul de la distance horizontale et/ou verticale des points de départ (Xs) et de l'au moins un point de mesure (Xm) entre eux sur la base du calcul de champ tensoriel, en particulier calcul permettant de savoir si l'au moins un point de mesure (Xm) se situe dans la direction d'un rivage à partir d'un point de départ (Xs) et, en présence de deux rivages, dans la direction de quel rivage ;
3. Détermination si la mesure topo-bathymétrique (Mj) ayant servi à calculer le point de mesure (Xm) présente au moins un autre signal de réflexion enregistré, lequel a été enregistré plus tard. Dans le cas où un successeur temporel a été enregistré, représentant un point géométriquement plus profond, il est possible de déterminer que le point plus profond tombe dans la catégorie voile de turbidité ;
4. Détermination de la différence de hauteur entre l'altitude ou la position spatiale de la source laser et du récepteur, pendant l'enregistrement des mesures associées aux points de départ et de l'altitude ou de la position spatiale de la source laser et du récepteur, pendant l'enregistrement de la mesure (Mj) associée au point de mesure (Xm) voisin ;
5. Détermination d'une erreur de hauteur à partir d'une comparaison de bande, pour le cas où les points de mesure (Xm) et les points de départ (Xs) sont des points provenant de différentes bandes de balayage, sur la base de mesures (Mj) ;
6. Calcul de la distance du point de mesure (Xm) à la ligne de rivage estimée ou identifiée manuellement auparavant lors de la mise à disposition des points de départ (Xs) ;
7. Calcul de la densité de points et calcul de la densité de points dans le milieu de recherche vertical et/ou horizontal. Le corps de recherche peut en particulier être déterminé par des voxels, des cylindres, des cercles ou autres ;
8. Calcul de la distribution verticale et/ou du positionnement du point de mesure (Xm) lorsque celui-ci se trouve dans le voile de pénétration ou de turbidité ;
9. Quantification à l'aide du calcul de champ tensoriel, permettant de savoir dans quelle mesure un point voisin se trouve sur un plan par rapport au point de départ (Xs) ;
10. Évaluation du rapport de voisinage sphérique/cylindrique.

**6.** Procédé selon l'une des revendications précédentes, dans lequel le calcul du deuxième indicateur de qualité (Q2) comporte une évaluation de l'un au moins des rapports de voisinage ou spatiaux suivants :

1. Existence d'un successeur temporel du point de mesure du point trouvé dans le même faisceau de mesure ;
2. Existence d'un prédécesseur temporel du point de mesure du point trouvé dans le même faisceau de mesure ;
3. Évaluation permettant de savoir si une influence d'atténuation doit être pondérée en fonction de l'impulsion laser sur la base de la mesure (Mj) du point à partir d'une altitude différente par rapport au point-graine ;
4. La mesure (Mj) associée au point de mesure (Xm) est-elle disponible comme relevé de forme d'onde complète ?
5. Le point de mesure (Xm) a-t-il une amplitude similaire ou un coefficient de réflexion similaire à celle/celui du point de départ (Xs) le plus proche ?
6. Le point de mesure (Xm) se trouve-t-il dans le milieu de recherche horizontal en dessous du point de départ (Xs) le plus proche et non pas dans la catégorie voile de turbidité ?

7. Le point de mesure (Xm) provient-il de la même bande de balayage ?

8. Le point de mesure a-t-il été relevé avec la même fréquence d'horloge ?

9. La correction d'erreur de hauteur à partir d'une comparaison de bande doit-elle être utilisée lorsqu'il s'agit de deux points provenant de différentes bandes de balayage ?

**7.** Procédé selon la revendication 6, dans lequel le deuxième indicateur de qualité (Q2) indique le nombre de rapports spatiaux de voisinage applicables.

**8.** Procédé selon l'une des revendications précédentes, dans lequel, en cas de détection manquante de la surface d'eau, celle-ci est classée comme point de surface d'eau virtuel.

**9.** Procédé selon la revendication 8, dans lequel une correction de la réfraction et du temps de propagation pour les points de mesure (Xm) apparaissant temporellement après le point de mesure (Xm) déterminé ou virtuel de la surface d'eau est effectuée sur la base des points de mesure caractérisés comme surface d'eau et soumise aux méthodes physiques pour le calcul de la diffraction et du temps de propagation de la lumière dans l'eau.

**10.** Procédé de cartographie de la surface terrestre au moyen d'un jeu de données topo-bathymétrique, comprenant les étapes suivantes :

- mise à disposition d'un jeu de données topo-bathymétrique comprenant au moins un point de mesure topo-bathymétrique (Xm) ;
- classification de chacun parmi les au moins un point(s) de mesure (Xm) à l'aide d'un procédé selon l'une des revendications 1 à 9, permettant de savoir si le point de mesure (Xm) décrit la position géométrique d'une surface d'eau ou non, et si oui, indication du point de mesure (Xm) comme position géométrique de la surface d'eau.

**11.** Système pour la mise en œuvre d'un procédé assisté par ordinateur pour la classification de points de mesure topo-bathymétriques (Xm) dans un jeu de données topo-bathymétrique, le système présentant :

- des moyens pour l'obtention d'un jeu de données topo-bathymétrique ;
- des moyens pour l'obtention de points de départ topographiques (Xs) classés ;
- des moyens pour la mise en œuvre d'un procédé selon l'une des revendications 1 à 10.

**12.** Produit de programme informatique pour la classification de points de mesure topographiques (Xm) dans un jeu de données topo-bathymétrique, dans lequel le produit de programme informatique présente des instructions lisibles par machine et exécutables par machine, lesquelles mettent en œuvre un procédé selon l'une des revendications 1 à 10 lorsqu'elles sont chargées dans un système adapté et exécutées.

# FIG 1

Transmitted pulse

7

Recorded signal

9

Transmitted pulse

7

Recorded signal

11

A

B

C

A

6

6'

B

FIG 2

13

Wasseroberfläche

15

Vegetation über Wasser

Topographie

15'

13

Gewässersohle
(Bathymetrie)

17

17'

Vegetation unter Wasser

EP 2 921 879 B1

FIG 3a

FIG 3b

FIG 3c

FIG 5a

23

25

EP 2 921 879 B1

FIG 5b

27

23a

25a

EP 2 921 879 B1

## FIG 6

EP 2 921 879 B1

FIG 7

## FIG 8

FIG 9a

FIG 9b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 509180 A1

**In der Beschreibung aufgeführte Nicht-Patentliteratur**

- **RUSS FAUX et al.** *Small Footprint Topo-Bathymetric LiDAR PNAMP Remote Sensing Forum,* 08. Mai 2013